# EUROPEAN PATENT APPLICATION

(11) **EP 0 564 430 A1**
(43) Date of publication of application: **06.10.1993**
(21) Application number: 93850061.8
(22) Date of filing: 30.03.1993
(51) Int. Cl.: G01D 5/36, B65G 1/04, G11B 21/00, G11B 33/14, G11B 21/22

(54) **A positioning method and positioning arrangement**

(30) Priority: 03.04.1992 SE 9201074
(71) Applicant: BT SYSTEMS AB, S-433 38 Partille (SE)
(72) Inventor: Johansson, Lennart, S-595 00 Mjölby (SE)
(74) Representative: Willquist, Bo

(57) **Abstract**

A method and an arrangement for bringing a load carrier (10; 13) to different predetermined positions along a given movement path. A pulse emitter is provided for generating pulse signals and delivering the signals to a computer unit in which the position of the load carrier is calculated by counting pulses from a reference value. The pulse emitter includes a pulse emitting rail (25; 26) which is provided with pulse markings (30) and extends along the movement path of the load carrier, and a sensor unit (24; 27) which is mounted on the load carrier for movement along the pulse emitting rail and for recording the pulse markings (30) on or in the rail. The detected pulse markings are converted to pulse signals in the sensor unit and these signals are delivered to the computer unit in a number which is relative to the number of detected pulse markings. Each predetermined position is stored in the computer unit as a function of the number of pulse signals received, starting from the reference value and the number of pulse signals received in regard of each position is compared with the number fed into the computer.

## Description

The present invention relates to a method for bringing a load carrier to different, predetermined position along a given path, wherein a pulse emitter is provided for generating pulse signals which are delivered to a computer unit in which position calculations are performed by counting the pulses starting from a reference value. The invention also relates to an arrangement for carrying out the method.

A load carrier of the aforesaid kind may, for instance, be a storage crane which is intended to handle goods in a fully automatic high bay storage facility in which it is necessary to position the crane extremely precisely adjacent each storage place along the storage corridors. The load carrier may also be a forked assembly of the kind normally provided on such cranes for lifting load units along a mast and positioning said units vertically adjacent a shelf compartment. Each of these load carriers must be capable of operating fully automatically without needing to be observed, which places high demands on the reliability of the positioning system. According to one known system, the transverse distance or the lifting height travelled is measured with the aid of a rack and pawl arrangement, with the pawl mounted on the load carrier and the rack mounted along the movement path. Although the position of the load carrier can be determined accurately and reliably with this arrangement, the components concerned are expensive, both with respect to manufacture and maintenance. It is possible to use less costly toothed belts as an alternative to the racks, but such belts become worn and stretched, therewith requiring repeated reprogramming of the defined positions. Furthermore, the belts need to be replaced within certain time limits, despite being highly wear resistant. Another drawback with these mechanical systems is that they limit the speed at which the load carrier can move, which is particularly troublesome when the load carrier is required to move over long distances, for instance along the length of the storage corridors. Another system is based on the principle of counting the number of revolutions carried out by a support wheel between two positions, see for instance US 4428708. The wheel revolutions can be counted with the aid of a pulse counter coupled to the wheel axle. However, although the load carrier is able to move more quickly, the accuracy of the measurement obtained is less certain, because the wheel often slips on the running surface or track. Consequently, it is necessary to read-off or detect a number of reference points in some other way each time the load carrier is moved, in order to be certain of a correct final position. This renders pre-programming more difficult and often necessitates alignment to be made with separate markings on each shelf compartment or like storage space. Another system, taught by US 3845715, operates totally with contactless reading of each desired stop point. These positions must be coded individually and must also be capable of being detected while the load carrier moves relatively quickly, which results in a very intricate and space-consuming sensor constructions.

Accordingly, one object of the present invention is to provide a positioning method and a positioning arrangement which will enable distances to be measured with a certainty which is equal to the certainty achieved with the aforesaid rack and pawl method, but which will also enable such measurements to be determined at at least the same speed as that afforded by the revolution counting method. Another object is to simplify installation and maintenance and the construction of the entire system, so that the system will be economically viable in the majority of cases where a load carrier shall be brought to an exact position. A third object is to enable the load carrier to be readily and repeatedly coupled to its movement path, for instance when transferring a storage crane between different, mutually parallel storage corridors. Further objects of the invention and advantages afforded thereby will be evident from the following description. These objects and advantages are achieved by an inventive method and an inventive arrangement having the characteristic features set forth in the following claims.

The invention is based on the realization that contactless pulse counting is, in the majority of cases, superior to mechanical distance measuring systems, and also on the realization that pulses should be read from the load carrier directly on fixed pulse markings along the movement path. This means that all pulse markings will obtain given positions in relation to desired stop positions along the path of movement of the load carrier, while enabling pulses to be detected from the moving load carrier. This excludes all risk of gaps between pulse registrations and actual movement. Since it is not necessary to measure distances in actual length measurements, positioning of the load carrier can be effected exclusively with the aid of a pulse counting process. Thus, the number of pulses registered is fully decisive with regard to the position of the load carrier, and not a measured travel distance, therewith enabling each position to be inserted into the computer as a given number of pulses. In turn, this enables the manufacture and installation of the pulse markings to be effected with relatively moderate accuracy requirements, which is naturally very important from an economical aspect.

According to the present invention pulse markings are detected by a pulse emitting rail mounted along the path travelled by the load carrier, and reading or scanning of the markings is effected with the aid of a sensor unit mounted on the load carrier. The detected pulse markings are converted to pulse signals in the sensor unit, which delivers to the computer unit a number of signals which corresponds to the number of pulse markings detected by the sensor unit. Each predetermined position is stored in the computer unit as a function of the number of pulses or pulse signals received, starting from the reference value, wherein the number of pulse signals obtained for respective positions is compared with the number inserted in the computer. When moving between two or more predetermined positions, the load carrier is conveniently positioned by continuously adding or subtracting pulse signals without inserting new reference values into the computer. The pulse emitting rail may comprise a perforated rail in which holes are disposed continuously along said rail, while the sensor unit will preferably comprise a U-shaped photocell unit whose two legs are placed on a respective side of the rail and which detect light through the holes in said rail. The invention can be applied advantageously with railbound, internal materials handling storage cranes, and particularly for positioning the load carrier horizontally, wherein the perforated rail is mounted so as to be firmly connected to associated storage sites, whereas the sensor unit can be fitted to the crane mast.

The invention will now be described in more detail with reference to the accompanying drawings, in which:
Figure 1 is a side view of a load carrier in the form of a storage crane which is intended to be brought to specific positions in accordance with the invention;
Figure 2 is a perspective view of an inventive pulse emitter;
Figure 3 illustrates schematically a pulse train deriving from the pulse emitter illustrated i Figure 2;
Figure 4 is a cross-sectional view of the top guide beam taken on the line 4-4 in Figure 1, said view also schematically illustrating a pulse emitter means; and
Figures 5-7 are cross-sectional views of a pulse emitter means mounted in three alternative positions on a storage rack or like storage place.

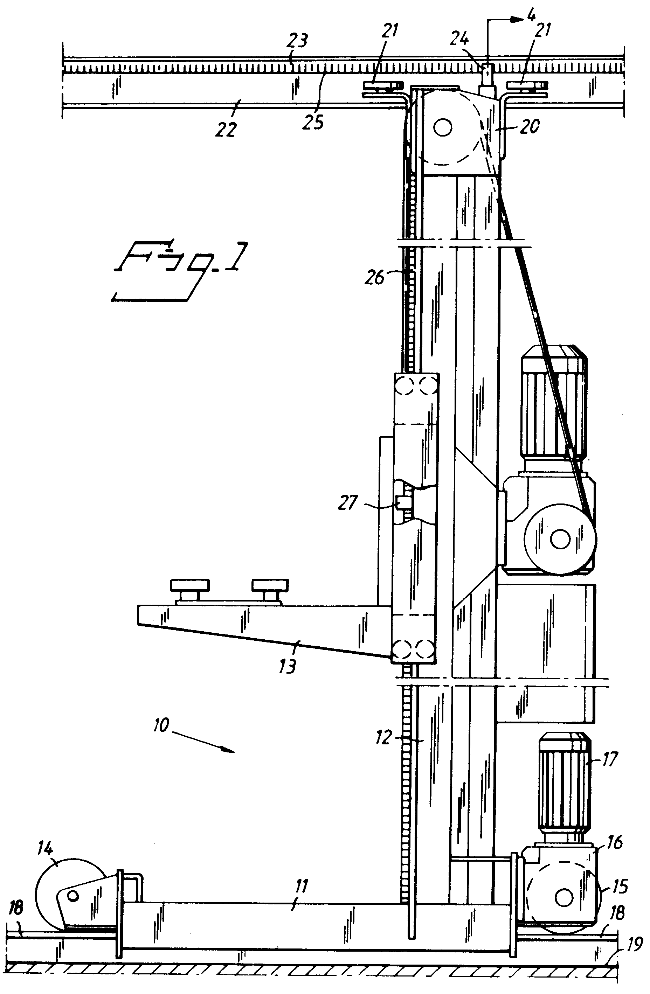

The invention is primarily intended for positioning storage cranes of the kind illustrated in Figure 1. This crane 10 typically comprises a wheeled chassis 11, a chassis-mounted vertical lifting mast 12, and a lifting carriage 13 which is movable along the mast. The chassis 11 is carried by a front and a rear wheel 14, 15, of which the rear wheel 15 is driven and is connected to a drive motor 17 via a gearbox 16. The wheels are intended to run along a rail 18 which consists of a bar mounted on the floor 19 of the storage corridor. The crane is held in a stable vertical position by means of a top guide mounted on the mast top 20. The top guide includes two or more wheels 21 arranged on respective sides of a top guide beam 22 mounted at the upper edge of the storage rack in the centre of the corridor. The crane functions to transport load units to and from storage sites in storage racks on each side of the corridor.

In order to position the lifting carriage 13 correctly in front of respective storage places or shelving compartments, it is necessary to position the entire crane 10 horizontally along the rail 18 and also to lift the carriage 13 to the correct height on the mast 12. This positioning of the crane and the lifting carriage is effected fully automatically through the agency of a pulse emitter which comprises a pulse emitting rail 23 mounted on the top guide beam 22 and a sensor unit 24 which is mounted on the mast top 20 for coaction with the pulse emitting rail 23. The pulse emitting rail is conveniently comprised of a perforated rail 25 which extends continuously along the whole of the horizontal movement path of the crane. A corresponding perforated rail 26 is mounted along the full height of the mast 12 and functions to deliver pulses to a second sensor unit 27 mounted on the lifting carriage.

The perforated rails 25, 26 are conveniently manufactured from steel band or the like which is provided with a uniform sequence of elongated holes 30. Each hole has two straight parallel edges 31 which extend perpendicularly to the longitudinal axis of the rail. The holes are spaced apart uniformly at distances from 3-10 mm apart and with an accuracy of ± 4-5%, while the width of the hole between said parallel edges 31 may vary between 1-4 mm. The vertical extension of the holes is in no way critical, although in order to obtain rails which can be handled in practice this vertical extension should be restricted to 10-30 mm, which gives a total rail width of less than 50 mm. Since the system does not require distances to be measured accurately, but only pulses to be counted, the perforated rail can be manufactured with relatively low tolerance requirements. This will enable the rail to be produced in an eccentric press having a simple punch. A rail thickness of about 1.5 mm has been found to provide sufficient stiffness, since the rail can be mounted on a stable support surface, provided by the top guide beam 22 and the mast 12 respectively. The sensor units 24, 27 are comprised suitably of U-shaped photocell units 32 which are mounted on respective load carriers 10, 13, such that the legs 33, 34 of the sensor units are located on a respective side of an associated rail 25, 26. Each photocell unit 32 includes a first and a second forked photocell 35, 36 which is intended to detect light through the holes 30 in the rail. The illustrated photocells are of a suitable standard type, although they may, of course, also comprise some form of multibeam special photocell. As the load carrier moves along the perforated rail, each photocell 35, 36 gives rise to a signal 37, 38 which forms a generally symmetrical square wave movement. The photocells are preferably placed at a distance apart such that the two signals 37, 38 will be phase shifted through 90° in relation to one another. A counter provided in the crane control system or in the computer functions to count the shifts of the emitter signal between high and low values, which provides two counter signals for each photocell and a pitch or division D. Thus, the two phase-shifted photocells together produce four signals with each pitch or division. Thus, with a pitch of 5 mm a new signal is obtained with each 5/4-ths of a millimeter, i.e. each 1.25th of a millimeter, which is sufficiently accurate under normal circumstances. If required, further photocells may be placed sequentially to one another, wherein, for instance, three photocells will give an accuracy of 5/6ths of a millimeter.

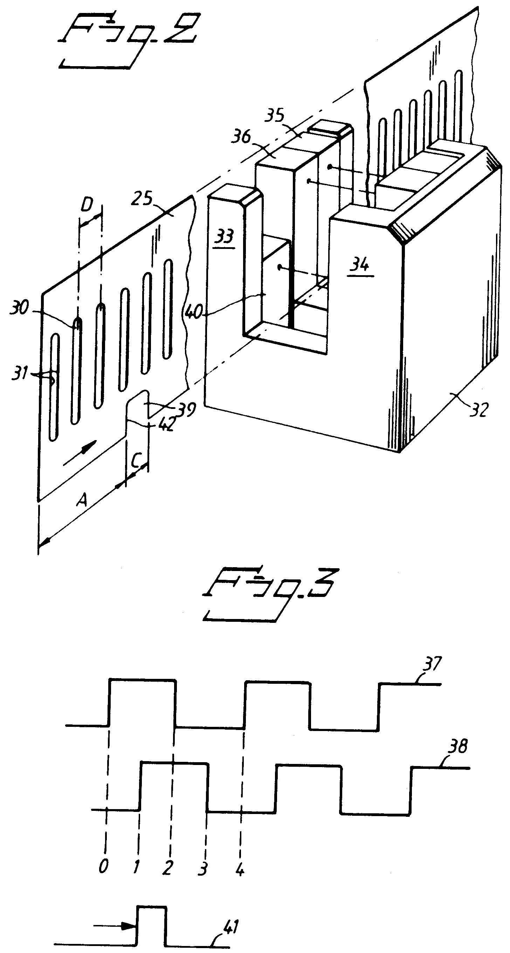

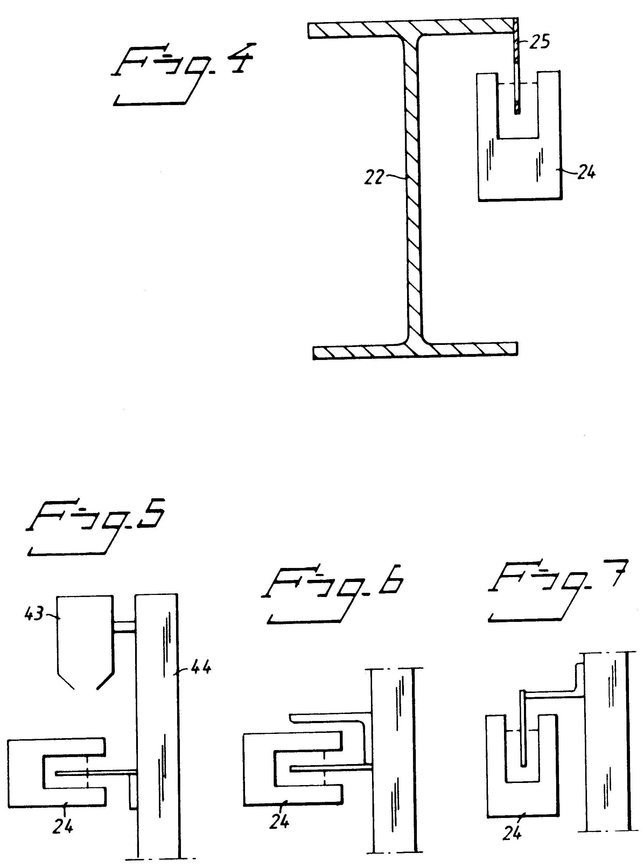

The aforesaid phase shift between the photocells enables the direction of movement of the crane to be easily registered in the computer unit, since movement in one direction will always cause the signals from the two photocells to pass in the same direction, e.g. high to high (to the right in Figure 3), whereas movement in the opposite direction will give rise to signals in different directions (to the left in Figure 3).

As beforementioned, the pulses are counted in a control unit or computer unit, and all pulses are counted with a starting point from a reference value, which must be inserted into the computer unit prior to each new operating period. To this end, each of the perforated rails 25, 26 is provided with an additional hole or an additional recess 39 at the outer edge of the rail. Together with a third forked photocell 40, this reference recess 39 delivers a zero setting signal 41 to the computer unit prior to initiating a pulse count. Such zero setting of the counter will normally only be required after a break in current supply, or in the event of the crane having been moved beyond the extension of the perforated rail, for instance when transferring the crane to another storage corridor. So as to simplify the counting function, the zero setting signal 41 will preferably be generated by a vertical edge 42 on the recess 39 lying in line with one of the hole edges 31.

All shelf compartments or other desired stop locations in the storage rack arrangement are fed into the computer unit as a function of the number of pulses or counter signals between the reference value and respective shelf compartments. The original infeed of such data is effected with a standard "teach-in process", i.e. the crane is driven along the storage corridor and stopped at each shelf row, while the lifting carriage 13 is similarly passed along one and the same shelf row and stopped at each shelf compartment. Subsequent to moving the crane and the lifting carriage longitudinally and vertically, a position matrix or position storage chart can be calculated and stored in the computer unit. The crane can then be driven and positioned while counting pulse signals first from the reference point and thereafter directly from position to position while continuously adding or subtracting pulse signals. The current pulse value is compared with the values fed in to the computer and the crane is stopped when a desired value and current value coincide. Precise agreement is often not necessary, and a given tolerance can be permitted, for instance a tolerance of ± three pulse signals. The system is highly reliable even after the system has been in operation continuously over weeks and months, although, of course, different control functions must be incorporated for safety reasons. For instance the system will include a crane control function which causes the crane to make a fresh attempt when the first attempt to position the crane is unsuccessful, and also a function which will produce a new reference value in the event of repeated large positioning discrepancies. The pulses can be detected correctly even at speeds of 5 m per second in very long storage corridors. Consequently, it is unnecessary to provide additional markings or reference points, since the system can build on pure pulse counting.

The illustrated perforated rail is suitable for installation on the crane mast 12, preferably at the same hole pitch of 5 mm, and may also be used advantageously for positioning a transfer carriage when such carriages are included. Alternatively, in the case of very tall masts, the rail 25 may be placed closer to floor level, in order to facilitate installation and service.

The rail of the Figure 5 embodiment is thus placed immediately beneath the current supply rail 43, which is often carried by floor-mounted posts 44. This mounting is sufficiently stable, since no appreciable movement can occur between the posts and the storage rack construction. Figures 6 and 7 illustrate two further examples of the position of the perforated rail, either on the rack posts or on the current supply posts 44. As will be understood, other solutions are also conceivable, provided that the rail is accurately fixed so that its position in relation to the storage rack will remain unchanged and so that the photocell unit is able to pass freely along the rail.

The pulse emitter construction with straight perforated rails and a U-shaped photocell unit enables the system to be readily activated and deactivated, for instance when transferring the crane between two storage corridors. In this case, the photocell unit is able to readily accompany the crane mast as the mast leaves the top guide beam and the photocell unit can be guided in along a new perforated rail in a contactless fashion when the crane is again started.

## Claims

1. A method of bringing a load carrier (10; 13) to different predetermined positions along a given path, wherein a pulse emitter is intended to generate pulse signals and deliver said signals to a computer unit in which a load carrier position is calculated by counting pulses starting from a reference value, **characterized** by detecting pulse markings (30) on a pulse emitting rail (25; 26) that extends along the path travelled by the load carrier with the aid of a sensor unit (24; 27) mounted on said load carrier; converting the detected pulse markings into pulse signals in the sensor unit; delivering these pulse signals to the computer unit in a number which is relative to the number of the pulse markings detected; and storing each predetermined position in the computer unit as a function of the number of pulse signals received, starting from the reference value, and comparing the number of pulse signals obtained with respective positions with said number stored in the computer.

2. A method according to Claim 1, **characterized** by positioning the load carrier as it moves between two or more predetermined positions by continuously adding or subtracting pulse signals without inserting new reference values.

3. An arrangement for bringing a load carrier (10; 13) to different predetermined positions along a given movement path, including a pulse emitter for generating pulse signals and delivering said signals to a computer unit which is intended to determine the position of the load carrier by counting the number of pulses received, starting from a reference value,
**characterized** in that the pulse emitter includes a pulse emitting rail (25; 26) which is provided with pulse markings (30) and arranged along the movement path of the load carrier, and a sensor unit (24; 27) which is mounted on the load carrier for movement along the pulse emitting rail and for recording the pulse markings (30) on or in said rail.

4. An arrangement according to Claim 3, **characterized** in that the pulse emitting rail is comprised of a perforated rail (25; 26) provided with holes or apertures (30) which are placed continuously along the rail; and in that the sensor unit (24; 27) is comprised of a U-shaped photocell unit (32) whose two legs (33, 34) are each disposed on a respective side of the perforated rail for detecting light through the holes or apertures (30) disposed therealong.

5. An arrangement according to Claim 4, **characterized** in that the holes or the apertures (30) are configured for producing, via the photocell unit (32), pulse signals in the form of an essentially symmetric square wave movement for registration in the computer unit.

6. An arrangement according to Claim 4 or 5, **characterized** in that the photocell unit (32) includes two fork photocells (35, 36) which are placed at a mutual distance apart in the movement direction such that the pulse signals from the photocells will be phase shifted through 90° in relation to one another.

7. An arrangement according to any one of Claims 4-6, **characterized** in that the holes or the apertures (30) are arranged with a mutual pitch (D) of 3-10 mm, preferably 5 mm, with an accuracy of ± 4-5%.

8. An arrangement according to any one of Claims 4-7, **characterized** in that the perforated rail (25; 26) has a reference recess or reference hole (39) which functions, with the assistance of the photocell unit (32), to register a pulse count reference value; and in that said photocell unit (32) includes a third fork photocell (40) which functions to detect light and to register the reference recess.

9. An arrangement according to any one of Claims 3-8, **characterized** in that the load carrier is a rail bound internal materials handling crane (10) comprising a wheeled chassis (11), a chassis mounted mast (12) and a load-carrying lifting carriage (13) which is movable along the mast, wherein the crane is intended to run on a rail (18) along storage racks in one or more storage corridors and wherein the mast top (20) is guided by a top guide beam (22); and in that the perforated rail (25) is mounted on the storage rack or on elements firmly connected thereto, preferably on the top guide beam (22); and in that the centre unit (24) is mounted on the mast (12) and the pulse emitter is intended to determine the position of the crane in relation to the storage rack.

10. An arrangement according to any one of Claims 4-9, **characterized** in that the holes or the apertures (30) in the rail are elongated holes having two long, straight and mutually parallel edges (31) which extend generally perpendicular to the longitudinal axis of the rail; and in that the distance between said straight, mutually parallel edges is 1-4 mm and the length of the holes is 10-30 mm.
